# EUROPEAN PATENT SPECIFICATION

(11) **EP 4 223 099 B1**
(45) Date of publication and mention of the grant of the patent: **19.11.2025**
(21) Application number: 23165728.9
(22) Date of filing: 20.07.2022
(51) Int. Cl.: A01D 34/82, A01D 34/67

(54) **MOBILE DEVICE FOR THE MAINTENANCE OF LAND COMPRISING A FASTENING ELEMENT AND PROCEDURE FOR MOUNTING SUCH A DEVICE**
MOBILE VORRICHTUNG ZUR BODENPFLEGE MIT EINEM BEFESTIGUNGSELEMENT UND VERFAHREN ZUR MONTAGE SOLCH EINER VORRICHTUNG
DISPOSITIF MOBILE POUR L'ENTRETIEN DE TERRAIN COMPRENANT UN ÉLÉMENT DE FIXATION ET PROCÉDÉ DE MONTAGE D'UN TEL DISPOSITIF

(30) Priority: 31.08.2021 IT 202100022631
(43) Date of publication of application: 09.08.2023
(62) Divisional of application: 22185943.2
(73) Proprietor: Stiga S.p.A. in breve anche St. S.p.A., 31033 Castelfranco Veneto (TV) (IT)
(72) Inventor: D'AGOSTINI, Mauro, 35018 San Martino di Lupari (PD) (IT); MARTONE, Dario, 35138 Padova (PD) (IT); BACCHIN, Gian Luca, 31033 Castelfranco Veneto (TV) (IT); NIRO, Adriano, 31100 Treviso (TV) (IT); CAMERON, James, 31100 Treviso (TV) (IT)
(74) Representative: PGA S.p.A.

(56) References cited:
- US-A- 2 965 386
- US-A1- 2005 188 664
- US-A1- 2014 260 157

## Description

### FIELD OF THE INVENTION

The present invention relates to a mobile device for the maintenance of land, for example gardens, turfgrasses or agricultural land. In particular, the mobile device can be a lawnmower having a work unit constrained to a handle by means of a fastening element, for example a bracket. The present invention further relates to a procedure for mounting the work unit with the handle using the fastening element.

### BACKGROUND ART

The use of mobile devices is known in the field of land maintenance, in particular gardening, such as lawnmowers, soil tillers, soil aerators, etc., having a work unit manually moved or directed by a handle constrained to the work unit by means of a bracket. In particular, the engagement between the handle and the work unit occurs by inserting bolts carried by the handle, inside the respective holes defined on the bracket, the latter carried by the work unit itself.

Although the solution described above allows to effectively constrain a work unit to a handle, the Applicant has found that such a solution highlights limitations and drawbacks. In particular, the coupling by means of a perforated bracket cannot be performed by a single user independently, thus making the coupling process complex and impractical.

The state of the art comprises in particular technical solutions of a lawnmower device in which the handlebar is constrained to the frame by means of an element comprising a pair of grooves, which are however not used for fastening the handlebar, but exclusively for adjusting the inclination. Document US2,965,386 relates to a lawnmower device comprising a structure for mounting the handlebar to the frame. The mounting structure comprises an arm integral with the frame to which the handlebar is rotatably constrained. On the upper wall of the arm there are two notches to which two protrusions are selectively engaged, forming part of a plate associated with the handlebar. Document US2014/0260157A1 relates to a lawnmower comprising means for adjusting the inclination of the handle with respect to the frame. A plurality of notches are obtained on an arcuate element integral with the frame, so as to selectively house a dentil integral with the handlebar. The inclination of the handlebar therefore varies depending on the notch in which the dentil is inserted.

Document US2005/0188664A1 relates to a lawnmower device comprising a system which allows a fastening of the handlebar which is releasable by means of a manually operated lever.

### OBJECT OF THE INVENTION

Therefore, the object of the present invention is to solve at least one of the drawbacks and/or limitations of the previous solutions.

A first object of the present invention is to provide a mobile device comprising a fastening element capable of facilitating and minimizing the mounting times of the mobile device.

A further object of the invention is to offer a solution for fastening the handle to the work unit of a mobile device for the maintenance of land such as gardens which ensures a stable and efficient engagement between the parts.

The object of the present invention is also to provide a mobile device comprising a fastening element having a simple and compact structure, achievable by known industrial processes and with low implementation costs.

These and other objects, which will appear more clearly from the following description, are substantially achieved by a mobile device and a mounting procedure of the mobile device in accordance with one or more of the appended claims.

### BRIEF DESCRIPTION OF THE DRAWINGS

Some embodiments and aspects of the invention will be described hereinafter with reference to the accompanying drawings, given merely for illustrative, non-limiting purposes in which:
- Figures 1 and 3 show perspective views of a mobile device in accordance with a first embodiment of the present invention;
- figure 2 is a detailed view of a second embodiment of the mobile device in accordance with the present invention;
- figure 4 is a detailed view of the mobile device of figure 3;
- figures 5 and 6 are perspective views of a fastening element of the mobile device in accordance with the present invention;
- figure 7 is a perspective view of a drive handle of the mobile device in accordance with the present invention;
- figure 8 is a detailed view of the drive handle of figure 7;
- finally figure 9 shows a third embodiment related to the handle-drive fastening of the mobile device work unit in accordance with the present invention.

### DEFINITIONS AND CONVENTIONS

It should be noted that in the present detailed description, corresponding parts illustrated in the various figures are indicated with the same numerical references. The figures could illustrate the object of the invention through non--scale depictions; therefore, the parts and components illustrated in the figures related to the object of the invention could exclusively relate to schematic depictions.

### DETAILED DESCRIPTION

### Mobile device 1

A mobile device 1 configured to perform maintenance operations, for example cutting turfgrasses, within a work area of a land, for example a turfgrass, a garden or an agricultural land, has been indicated as a whole with 1.

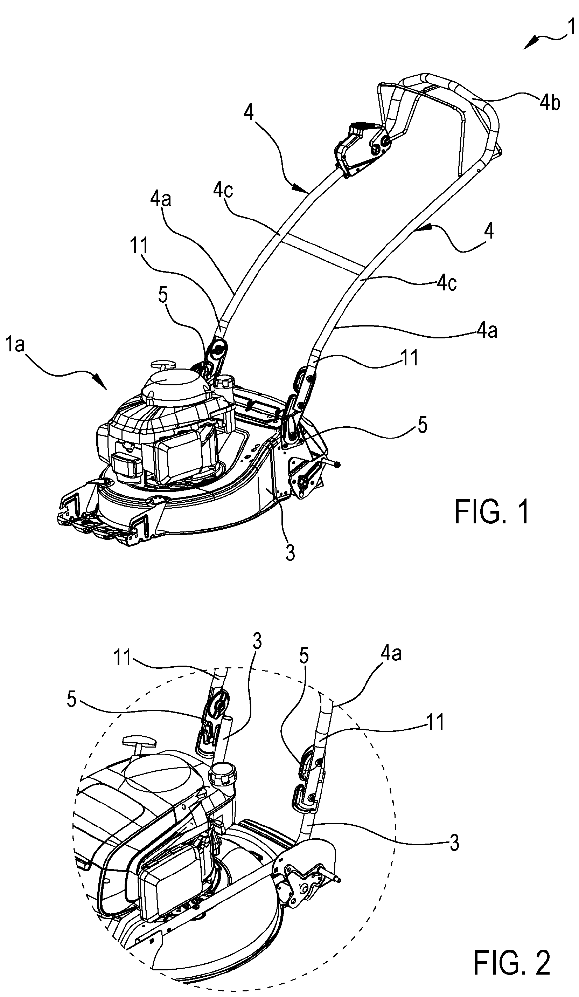

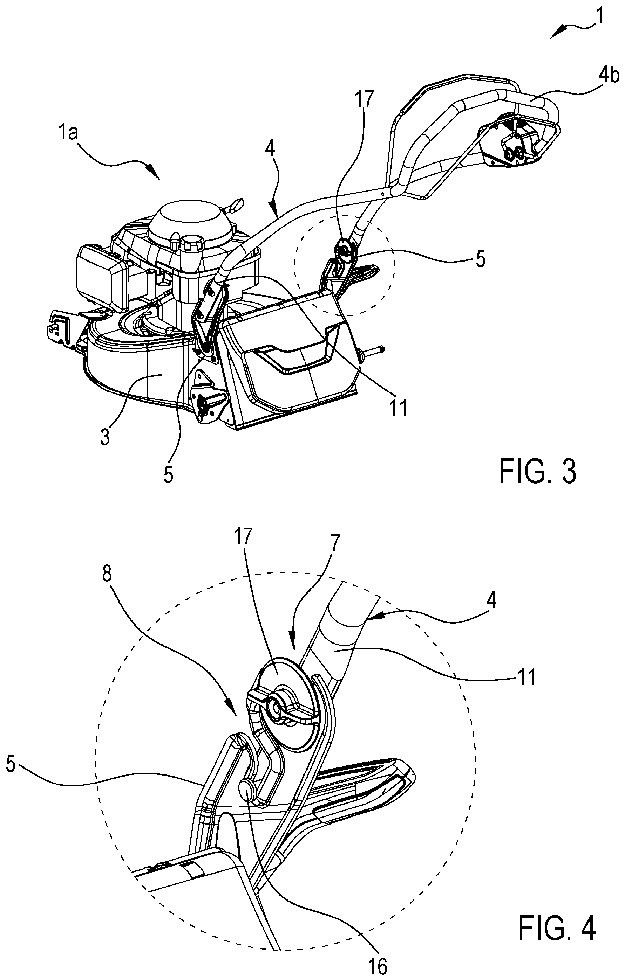

The mobile device depicted in figures 1 and 3 can be a user-driven device or a user-driven and pushed device. In particular, the mobile device 1 can comprise a work unit 1a provided with movement means 2, for example one or more wheels, or one or more rollers, or one or more motorized tracks or still other members, adapted to determine the advancement of the mobile device (for example, the work unit 1a can comprise one or more motors for the operation of the movement means and of the work tool(s)), or the mobile device can for example comprise wheels or rollers or idle tracks moved as a result of the thrust exerted by the user.

The mobile device 1 and in particular the work unit 1a further comprises a support frame 3 carrying the movement means 2, and one or more work tools (such as blades, tools for trimming the land or other tools which are motorized or not motorized and known per se and therefore not illustrated) configured to perform the maintenance operations within the work area.

Furthermore, the mobile device 1 can comprise a drive handle 4 constrained to the frame 3 of the work unit 1a and configured to allow an operator to move and/or direct the mobile device within the work area. The drive handle 4 extends behind the frame along an inclined direction transverse to the frame 3, between a first end 4a constrainable to the frame and a second end 4b configured to allow gripping by an operator. The drive handle 4 can be made of metal material, for example steel, iron or aluminium, or plastic or composite material.

As shown in the accompanying figures, the drive handle 4 is constrained to the frame 3 by means of a fastening element 5 interposed between the frame 3 and the same drive handle 4. In particular, the coupling between the drive handle 4 and the frame 3 is obtained as a result of the engagement between the fastening element 5 and a coupling portion 11 of the handle 4.

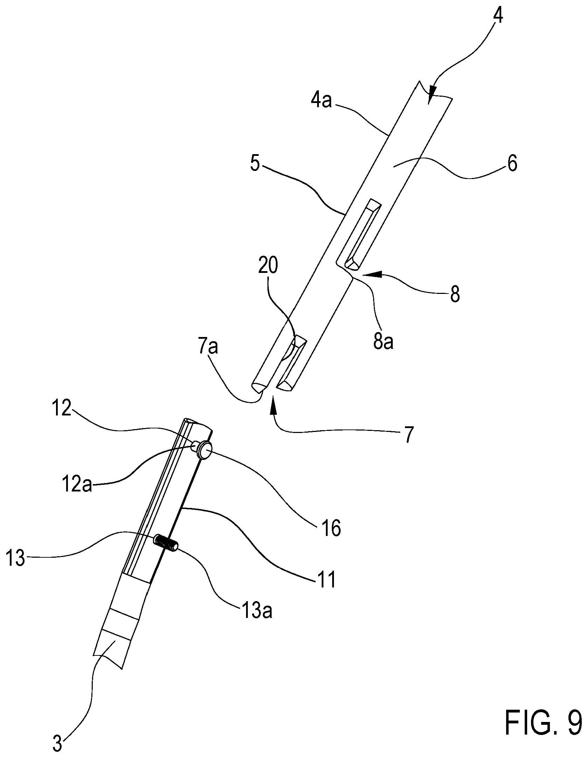

It should be noted that in the accompanying figures, a fastening element 5 carried by the frame 3 and a coupling portion 11 carried by the drive handle 4 have been shown. However, an embodiment of the invention in which the fastening element 5 is carried by the drive handle 4 is not excluded, while the coupling portion 11 is carried by the frame 3 (see figure 9 in this regard).

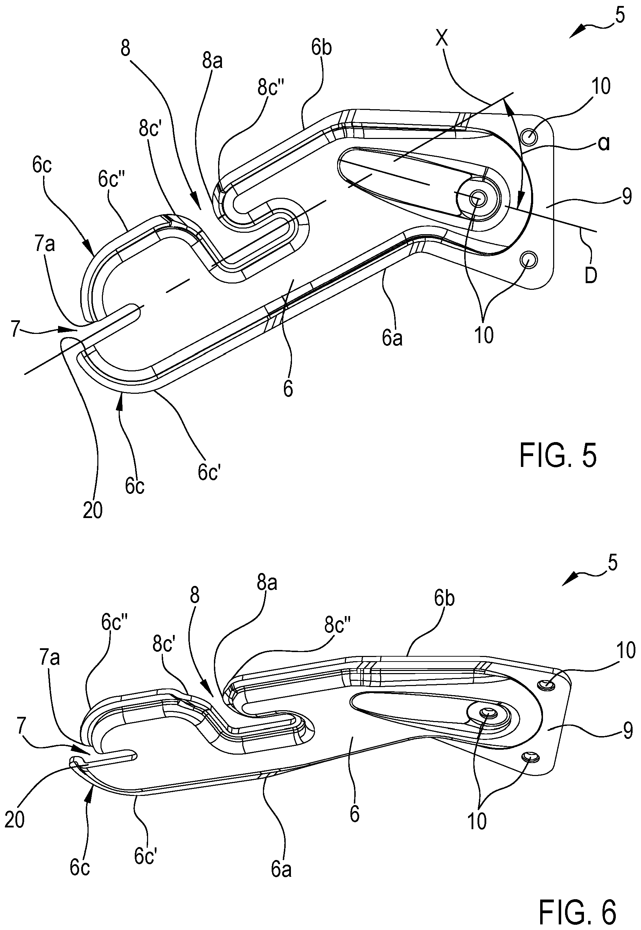

The fastening element 5 comprises at least one main body 6 having, for example, an elongated shape. The body 6 is laterally delimited by at least a first and a second side 6a, 6b opposite each other. The main body 6 further comprises a head portion 6c, which delimits one end of the main body itself and connects the first and the second side 6a, 6b. For example, the head portion 6c can have a curvilinear shape, which connects respective ends of the first and the second side 6a, 6b. In particular, the head portion 6c has a first and a second lead-in stretch 6c', 6c" separated from each other by a first groove 7 penetrating in the body 6 and detailed hereinafter. In particular, as for example shown in figures 5 and 6, the first lead-in stretch 6c' is interposed between the first side 6a and the first groove 7, while the second lead-in stretch 6c" is interposed between the second side 6b and the same first groove. It should be noted how the first and the second stretch 6c', 6c" are offset along a straight trajectory X of the first groove 7. In fact, the first lead-in stretch 6c' protrudes externally with respect to the second lead-in stretch 6c", in the direction of the trajectory X, to define a support lip 20 configured to guide an element associated with the coupling portion in insertion inside the first groove 7, as will be further explained below.

As previously mentioned, the first groove 7 extends from an inner zone of the main body 6 to a peripheral area of the main body 6 itself where a first opening 7a for access to the first groove 7 is defined; in other words, the first groove is delimited by an open peripheral profile. In particular, the first opening 7a of the first groove 7 faces at the head portion 6c of the main body 6, spacing the first and second lead-in stretches 6c', 6c" from each other. As for example shown in figure 5, the first groove 7 is substantially defined in the peripheral area of the main body 6 at the head portion 6c, and extends from the first opening 7a for at least a first straight stretch along the trajectory X. In the examples illustrated the first groove 7 is in fact entirely straight from the first opening to a bottom of the groove 7 itself.

The fastening element 5 further comprises a second groove 8, which cooperates with the first groove 7, to removably engage the coupling portion 11 of the handle 4 with the frame 3, obtaining a constraint condition of the same fastening element 5. The second groove 8 is distinct and spaced from the first groove 7, and extends from an inner area of the main body 6 towards the peripheral area of the same main body where a second opening 8a is defined for access to the second groove 8. The second groove 8 is defined by an open peripheral profile defined on the main body 6. As can be seen for example from figure 5, the second opening 8a of the second groove 8 is spaced from the first opening 7a of the first groove 7: the first and the second groove 7, 8 are thus completely distinct and spaced from each other. In other words, the second opening 8a of the second groove 8 faces at the first or second side 6a, 6b of the main body, at a predetermined distance from the first opening 7a. Under the geometric profile, the second groove extends along a first and a second stretch which are transverse to each other. In particular, the first stretch extends from the second opening 8a transversely to the trajectory X of the first groove 7, while the second stretch extends in continuation of the first stretch, along a direction parallel to, or coinciding with, the trajectory X of the first groove 7: in the example shown, the second groove 8 has a substantially "L" shape and the second stretch of the second groove is straight and of equal extension to the extension of the first groove.

Under the structural profile, the fastening element 5 can be a bracket, for example plate-shaped, engaged (for example welded or fastened by screws or other) to the frame and for example made of metallic or plastic material.

Figures 1 to 4 show the mobile device in use conditions, in which the drive handle 4 is constrained to the frame 3 by means of the fastening element 5. In this condition, the second groove 8 faces away from the land, so that the engagement of the coupling portion 11 of the handle 4 with the groove 8 of the fastening element 5 is facilitated by the action of the force of gravity.

According to a first embodiment, for example shown in figures 5 and 6, the fastening element 5 comprises a constraining portion 9, extending from the main body 6 along an extension direction D which is inclined with respect to the trajectory X by an internal angle α between 50° and 70°. The constraining portion 9 in turn has a plurality of holes 10, not aligned with each other (for example three holes arranged in a triangle), each of which is configured to allow the insertion of a bolt or a screw adapted to constrain the fastening element 5 to the frame 3.

In accordance with a second embodiment of the invention shown in figure 2, the constraining portion 9 emerges, for example laterally, from the main body 6 starting from the first or the second side 6a, 6b and is configured to engage, for example by interference, a tubular sleeve carried by the frame 3. In fact, according to the latter embodiment, the constraining portion 9 is free of holes 10 and has a cylindrical or tubular shape adapted to receive in insertion the sleeve (or adapted to insert into the sleeve) carried by the frame 3.

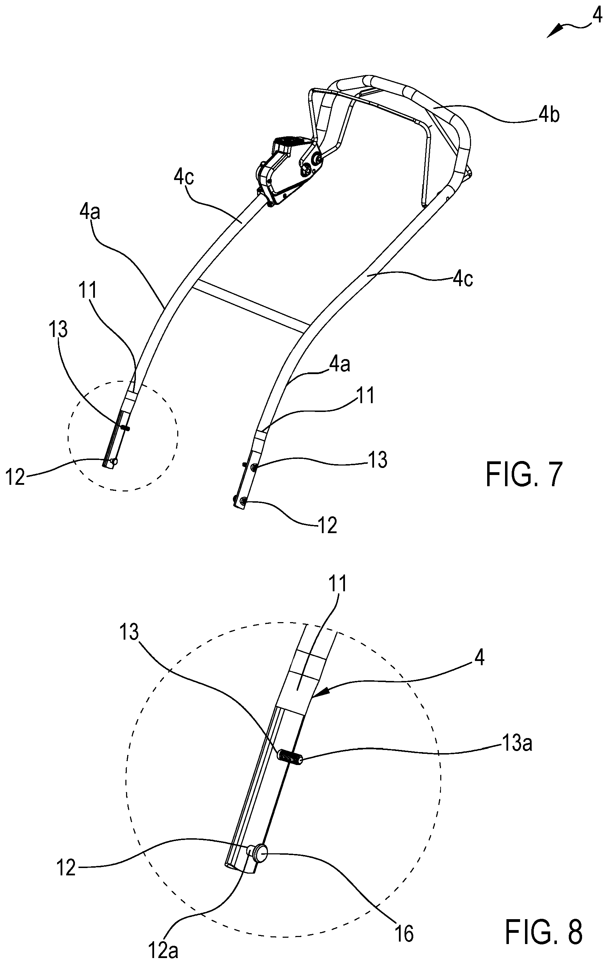

As previously mentioned, the drive handle 4 of the mobile device 1 comprises the coupling portion 11, which is engageable to the fastening element 5 at least between a constraint condition (which ensures the stable engagement of the two parts 5 and 11 thus allowing the locking of the drive handle 4 with respect to the frame 3) and a release condition (which allows the disengagement of the handle 4 from the frame 3). In particular, in the constraint condition, the fastening element 5 is engaged to the coupling portion 11, while in the release condition, the fastening element 5 is disengaged from the coupling portion 11. As shown in figures 7 and 8, the coupling portion 11 has an elongated body, for example of tubular shape, extending along a predetermined extension direction, on which at least a first and a second locking pin 12, 13 are engaged, respectively configured to insert inside the second groove 8 and the first groove 7. The first and the second locking pin 12, 13 are aligned with each other along the extension direction of the elongated body of the coupling portion 11, so as to be able to be positioned inside the first groove 7 and the second stretch of the second groove 8.

The first and the second locking pin 12, 13 have a respective stretch 12a, 13a (figure 8) emerging transversely with respect to the elongated body of the coupling portion 11: each stretch 12a, 13a is respectively configured to insert inside the first and the second groove 7, 8. Even more in detail, the stretch 12a of the first locking pin 12 terminally carries a body or terminal expansion 16, having a radial dimension greater than the radial dimension of the stretch 12a and configured to prevent the extraction of the first locking pin 12 from the second groove along a direction parallel to the axis of the first pin 12. In other words, by virtue of the body or expansion 16, the first locking pin 12 can be inserted into the second groove 8 or removed from the second groove 8 only through the second access opening 8a since the stretch 12a has a radial dimension such as to slide in the second groove, while the body or expansion 16 has a minimum radial dimension greater than the maximum width of the second groove. The stretch 12a of the first locking pin 12, in the constraint condition of the fastening element 5, is thus inserted inside the second groove, while the body or expansion 16 remains outside the second groove acting in abutment on one of the opposite side surfaces of the main body.

With regard to the second locking pin 13, it has a respective stretch 13a of radial dimensions such as to insert and slide into the first groove (in practice, the second pin has a maximum radial dimension smaller than the width of the second groove).

The coupling portion 11 further comprises a locking knob 17 configured to engage a threaded portion made on the stretch 13a of the second locking pin 13 and configured to constrain the coupling portion 11 to the fastening element 5. The stretch 13a of the second locking pin 13, in the constraint condition of the fastening element 5, is thus engaged within the first groove 7, while the main body of the coupling portion 11 and the locking knob 17 act in abutment on surfaces of the main body 6 opposite each other. In other words, the locking knob 17 is configured to permanently constrain the second locking pin 13 to the first groove, preventing any clearance between the coupling portion 11 and the main body 6 of the fastening element or plate 5.

It should further be noted that the device can comprise a plurality of coupling portions 11 and respective fastening elements 5 identical to what is described above; for example, in the illustrated embodiments, the drive handle 4 comprises a horizontal manoeuvring stretch at the second end 4b of the handle itself on which the user can act when he must push and/or direct the mobile device 1; the handle 4 comprises two distinct arms 4c extending, for example parallel or mirrored with each other, from the second end 4b towards the work unit 1a and each terminating in a respective coupling portion 11. In this case each coupling portion 11 of each arm 4c engages a respective fastening element 5 (in the case illustrated in the drawings there are therefore two fastening elements 5, one for each of the arms 4c of the handle 4) each of which is carried by the frame 3.

### Mounting procedure

A further object of the present invention is a procedure for mounting the mobile device in accordance with the description above and/or in accordance with any of the attached claims.

The procedure comprises the steps of constraining the drive handle 4 to the frame 3 using the first and the second groove 7, 8 present on each of the fastening elements (or on the fastening element in the event of a handle 4 with only one arm 4c).

In particular, the procedure includes constraining the coupling portion 11 of each arm 4c to the or to a respective fastening element 5.

In detail, for each arm 4c, the constraining step comprises the sub-steps of:
- inserting the first locking pin 12 inside the first stretch of the second groove 8,
- arranging the second locking pin 13 at the first opening 7a of the first groove 7,
- inserting the first locking pin 12 inside the second portion of the second groove 8 and simultaneously inserting the second locking pin 13 inside the first groove 7.

In particular, the step of arranging the second locking pin at the first opening includes resting such a second pin on the lip 20, thereby discharging the weight of the handle 4 on the frame 3 and thus on the ground.

Finally, the procedure includes, following the step of inserting the second locking pin 13 inside the first groove 7, and after bringing both the first and the second pin at a bottom of the respective grooves, an engagement step between the threaded portion of the second locking pin 13 and the knob 17. Modifications and variations to the described device and procedure can be included, within the scope of protection of one or more of the appended claims.

For example, figure 9 shows an example in which the fastening element 5, comprising the first and the second groove 7 and 8 as described above, is carried by the drive handle 4, while the coupling portion 11 is carried by the frame 3 (see figure 9 in this regard). In this case, it should be noted how the second access opening, during mounting, is facing downwards and how the lip 20 is positioned so as to facilitate the mounting operations and the discharge of the weight of the handle 4 on the frame 3 and thus on the ground.

## Claims

1. Mobile device (1) for the maintenance of land, comprising:
- movement means (2) configured to allow a movement of the mobile device (1) within a work area,
- a frame (3) comprising at least one work tool configured to perform maintenance operations on the work area,
- a drive handle (4) configured to allow an operator to drive said mobile device (1) within the work area,
- at least one fastening element (5) interposed, at least in a constraint condition, between the drive handle (4) and the frame (3), and
- at least one coupling portion (11) carried by the drive handle (4) or by the frame (3),
wherein said fastening element (5) comprises:
- at least one main body (6),
- at least a first groove (7) extending from an inner area of the main body (6) to a peripheral area of the main body (6) itself where a first opening (7a) for access to the first groove (7) is defined, and
- at least a second groove (8) distinct and spaced from the first groove (7), said second groove (8) extending from the inner area of the main body (6) towards the peripheral area of the main body (6) itself where a second opening (8a) for access to the second groove (8) is defined,
wherein said coupling portion (11) is removably engageable to the fastening element (5), at least between:
- the constraint condition in which the fastening element (5) is engaged to the coupling portion (11), and
- a release condition in which the fastening element (5) is disengaged from the coupling portion (11) and
wherein the coupling portion (11) has at least a first and a second locking pins (12, 13) respectively configured to insert inside the second groove (8) and the first groove (7),
wherein the coupling portion (11) has an elongated body extending along a predetermined extension direction,
the mobile device (1) being **characterized in that** the first and the second locking pins (12, 13) are aligned along said extension direction, wherein the first and the second locking pins (12, 13) have a respective stretch (12a, 13a) emerging transversely with respect to the elongated body of the coupling portion (11), each of said stretches (12a, 13a) being respectively engageable within the second and the first grooves (8, 7).

2. Device (1) according to claim 1, wherein, in the release condition, the fastening element (5) is carried by the frame (3), while the coupling portion (11) is carried by the drive handle (4).

3. Device (1) according to claim 1 or claim 2, wherein the elongated body of the coupling portion (11) is a tubular body.

4. Device (1) according to any one of claims 1 to 3, wherein said stretches (12a, 13a) emerge orthogonally with respect to the elongated body of the coupling portion (11).

5. Device (1) according to any one of claims 1 to 4, wherein the first groove (7) extends from the first opening (7a) for at least a first stretch, along a straight trajectory (X),
wherein the second groove (8) has:
- at least a first stretch extending from the second opening (8a), transversely to the trajectory (X) of the first groove (7), and
- at least a second stretch extending in continuation of the first stretch, along a direction parallel to, or coinciding with, the trajectory (X),
wherein the main body (6) has:
- at least a first and a second sides (6a, 6b) opposite each other, and
- a head portion (6c) connecting the first and the second sides (6a, 6b),
wherein the first opening (7a) of the first groove (7) faces the head portion (6c) of the main body (6),
wherein the second opening (8a) of the second groove (8) faces the first or the second sides (6a, 6b) of the main body (6), at a predetermined distance from the first opening (7a), and
wherein the first and the second sides (6a, 6b) of the main body (6) are straight and parallel to the trajectory (X).

6. Device (1) according to claim 5, wherein the fastening element (5) comprises at least one constraining portion (9) extending from the main body (6) and extending along an extension direction (D) which is inclined with respect to the trajectory (X).

7. Device (1) according to claim 6, wherein the extension direction (D) is inclined with respect to the trajectory (X) by an internal angle between 50° and 70°.

8. Device (1) according to any one of claims 5 to 7, wherein the first opening (7a) is delimited by respective first and second lead-in stretches (6c', 6c") and wherein the second opening (8a) is delimited by respective first and second lead-in stretches (8c', 8c").

9. Device (1) according to claim 8, wherein the first and second lead-in stretches (6c', 6c") of the first opening (7a) are arcuate.

10. Device (1) according to claim 8 or claim 9, wherein the first and second lead-in stretches (8c', 8c") of the second opening (8a) are arcuate.

11. Device (1) according to any one of claims 8 to 10, wherein the first opening (7a) of the first groove (7) divides the peripheral area of the head portion (6c) of the main body (6) into:
- said first lead-in stretch (6c'), which is interposed between the first side (6a) and the first opening (7a) of the first groove (7), and
- said second lead-in stretch (6c"), which is interposed between the second side (6b) and the first opening (7a) of the first groove (7).

12. Device (1) according to claim 11, wherein the first lead-in stretch (6c') protrudes externally, parallel to said trajectory (X), with respect to the second lead-in stretch (6c") to define a support lip (20).

13. Procedure for mounting a device (1) according to any one of claims 5 to 12, comprising a step of constraining the drive handle (4) to the frame (3) by exploiting said first and said second grooves (7, 8) present on the fastening element (5),
wherein the coupling portion (11) of said device (1) has at least a first and a second locking pins (12, 13) respectively configured to insert inside the second groove (8) and the first groove (7) and
wherein the step of constraining the drive handle (4) to the frame (3) comprises the sub-steps of:
- inserting the first locking pin (12) inside the first stretch of the second groove (8),
- arranging the second locking pin (13) at the first opening (7a) of the first groove (7),
- inserting the first locking pin (12) inside the second stretch of the second groove (8) and simultaneously inserting the second locking pin (13) inside the first groove (7).

14. Procedure according to claim 13, wherein arranging the second locking pin (13) at the first opening (7a) includes resting such a second pin on a support lip (20), thus discharging the weight of the handle (4) on the frame (3).

15. Procedure according to claim 13 or to claim 14, wherein following the step of inserting the second locking pin (13) inside the first groove (7), an engagement step is included between a threaded portion of the second locking pin (13) and a knob (17).

## Patentansprüche

1. Mobile Vorrichtung (1) für die Instandhaltung von Land, umfassend:
- Bewegungsmittel (2), das dazu konfiguriert ist, eine Bewegung der mobilen Vorrichtung (1) innerhalb eines Arbeitsbereichs zu ermöglichen,
- einen Rahmen (3), der mindestens ein Arbeitswerkzeug umfasst, das dazu konfiguriert ist, Instandhaltungsarbeiten in dem Arbeitsbereich durchzuführen,
- einen Antriebsgriff (4), der dazu konfiguriert ist, einem Bediener zu ermöglichen, die mobile Vorrichtung (1) innerhalb des Arbeitsbereichs zu fahren, und
- mindestens ein Befestigungselement (5), das zumindest in einem Zwangszustand zwischen dem Antriebsgriff (4) und dem Rahmen (3) eingefügt ist, und
- mindestens einen Kupplungsabschnitt (11), der von dem Antriebsgriff (4) oder von dem Rahmen (3) getragen wird,
wobei das Befestigungselement (5) Folgendes umfasst:
- mindestens einen Hauptkörper (6),
- mindestens eine erste Nut (7), die sich von einem Innenbereich des Hauptkörpers (6) zu einem Randbereich des Hauptkörpers (6) selbst erstreckt, wo eine erste Öffnung (7a) für den Zugang zu der ersten Nut (7) definiert ist, und
- mindestens eine zweite Nut (8), die sich von der ersten Nut (7) unterscheidet und von dieser beabstandet ist, wobei sich die zweite Nut (8) von dem Innenbereich des Hauptkörpers (6) zu dem Randbereich des Hauptkörpers (6) selbst erstreckt, wo eine zweite Öffnung (8a) für den Zugang zu der zweiten Nut (8) definiert ist,
wobei der Kupplungsabschnitt (11) lösbar mit dem Befestigungselement (5) in Eingriff gebracht werden kann, zumindest zwischen:
- -dem Zwangszustand, in dem das Befestigungselement (5) mit dem Kupplungsabschnitt (11) in Eingriff steht, und
- einem Freigabezustand, in dem das Befestigungselement (5) von dem Kupplungsabschnitt (11) gelöst ist und
wobei der Kupplungsabschnitt (11) mindestens einen ersten und einen zweiten Verriegelungsstift (12, 13) aufweist, die jeweils dazu konfiguriert sind, in die zweite Nut (8) und die erste Nut (7) eingeführt zu werden, wobei der Kupplungsabschnitt (11) einen länglichen Körper aufweist, der sich entlang einer vorbestimmten Erstreckungsrichtung erstreckt, wobei die mobile Vorrichtung (1) **dadurch gekennzeichnet ist, dass** der erste und der zweite Verriegelungsstift (12, 13) entlang der Erstreckungsrichtung ausgerichtet sind,
wobei der erste und der zweite Verriegelungsstift (12, 13) jeweils eine Strecke (12a, 13a) aufweisen, die quer in Bezug auf den länglichen Körper des Kupplungsabschnitts (11) herausragt, wobei jede der Strecken (12a, 13a) jeweils in die erste und die zweite Nut (8, 7) eingreifen kann.

2. Vorrichtung (1) nach Anspruch 1, wobei das Befestigungselement (5) in dem Freigabezustand von dem Rahmen (3) getragen wird, während der Kupplungsabschnitt (11) von dem Antriebsgriff (4) getragen wird.

3. Vorrichtung (1) nach Anspruch 1 oder Anspruch 2, wobei der längliche Körper des Kupplungsabschnitts (11) ein rohrförmiger Körper ist.

4. Vorrichtung (1) nach einem der Ansprüche 1 bis 3, wobei die Strecken (12a, 13a) orthogonal in Bezug auf den des Kupplungsabschnitts (11) herausragen.

5. Vorrichtung (1) nach einem der Ansprüche 1 bis 4, wobei sich die erste Nut (7) von der ersten Öffnung (7a) über mindestens eine erste Strecke entlang einer geraden Bahn (X) erstreckt,
wobei die zweite Nut (8) Folgendes aufweist:
- mindestens eine erste Strecke, die sich von der zweiten Öffnung (8a) quer zu der Bahn (X) der ersten Nut (7) erstreckt, und
- - mindestens eine zweite Strecke, die sich in Fortsetzung der ersten Strecke in einer Richtung parallel zu oder übereinstimmend mit der Bahn (X) erstreckt,
wobei der Hauptkörper (6) Folgendes aufweist:
- mindestens eine erste und eine zweite Seite (6a, 6b), die einander gegenüberliegen, und
- einen Kopfabschnitt (6c), der die erste und die zweite Seite (6a, 6b) verbindet,
wobei die erste Öffnung (7a) der ersten Nut (7) dem Kopfabschnitt (6c) des Hauptkörpers (6) zugewandt ist,
wobei die zweite Öffnung (8a) der zweiten Nut (8) der ersten oder der zweiten Seite (6a, 6b) des Hauptkörpers (6) in einem vorbestimmten Abstand von der ersten Öffnung (7a) zugewandt ist, und
wobei die erste und die zweite Seite (6a, 6b) des Hauptkörpers (6) gerade und parallel zu der Bahn (X) sind.

6. Vorrichtung (1) nach Anspruch 5, wobei das Befestigungselement (5) mindestens einen Begrenzungsabschnitt (9) umfasst, der sich von dem Hauptkörper (6) aus erstreckt und sich entlang einer Erstreckungsrichtung (D) erstreckt, die in Bezug auf die Bahnkurve (X) geneigt ist.

7. Vorrichtung (1) nach Anspruch 6, wobei die Erstreckungsrichtung (D) in Bezug auf die Bahn (X) um einen Innenwinkel zwischen 50° und 70° geneigt ist.

8. Vorrichtung (1) nach einem der Ansprüche 5 bis 7, wobei die erste Öffnung (7a) durch eine jeweilige erste und zweite Einführstrecke (6c', 6c',) begrenzt ist und wobei die zweite Öffnung (8a) durch eine jeweilige erste und zweite Einführstrecke (8c', 8c") begrenzt ist.

9. Vorrichtung (1) nach Anspruch 8, wobei die erste und zweite Einführstrecke (6c', 6c") der ersten Öffnung (7a) bogenförmig sind.

10. Vorrichtung (1) nach Anspruch 8 oder Anspruch 9, wobei die erste und zweite Einführstrecke (8c', 8c") der zweiten Öffnung (8a) bogenförmig sind.

11. Vorrichtung (1) nach einem der Ansprüche 8 bis 10, wobei die erste Öffnung (7a) der ersten Nut (7) den Randbereich des Kopfabschnitts (6c) des Hauptkörpers (6) unterteilt in:
- die erste Einführstrecke (6c'), die zwischen der ersten Seite (6a) und der ersten Öffnung (7a) der ersten Nut (7) eingefügt ist, und
- die zweite Einführstrecke (6c"), die zwischen der zweiten Seite (6b) und der ersten Öffnung (7a) der ersten Nut (7) eingefügt ist.

12. Vorrichtung (1) nach Anspruch 11, wobei die erste Einführstrecke (6c') in Bezug auf die zweite Einführstrecke (6c") parallel zu der Bahn (X) nach außen vorsteht, um eine Stützlippe (20) zu definieren.

13. Verfahren zum Montieren einer Vorrichtung (1) nach einem der Ansprüche 5 bis 12, umfassend einen Schritt des Begrenzens des Antriebsgriffs (4) an dem Rahmen (3) unter Ausnutzung der ersten und der zweiten Nut (7, 8), die an dem Befestigungselement (5) vorhanden sind,
wobei der Kupplungsabschnitt (11) der Vorrichtung (1) mindestens einen ersten und einen zweiten Verriegelungsstift (12, 13) aufweist, die jeweils dazu konfiguriert sind, in die zweite Nut (8) und die erste Nut (7) eingeführt zu werden, und
wobei der Schritt des Begrenzens des Antriebsgriffs (4) an dem Rahmen (3) die folgenden Unterschritte umfasst:
- Einsetzen des ersten Verriegelungsstifts (12) in die erste Strecke der zweiten Nut (8),
- Anordnen des zweiten Verriegelungsstifts (13) an der ersten Öffnung (7a) der ersten Nut (7),
- Einsetzen des ersten Verriegelungsstifts (12) in die zweite Ausdehnung der zweiten Nut (8) und gleichzeitiges Einsetzen des zweiten Verriegelungsstifts (13) in die erste Nut (7).

14. Verfahren nach Anspruch 13, wobei das Anordnen des zweiten Verriegelungsstifts (13) an der ersten Öffnung (7a) das Auflegen eines solchen zweiten Stifts auf eine Stützlippe (20) einschließt, wodurch das Gewicht des Griffs (4) auf den Rahmen (3) entlastet wird.

15. Verfahren nach Anspruch 13 oder Anspruch 14, wobei nach dem Schritt des Einführens des zweiten Verriegelungsstifts (13) in die erste Nut (7) ein Schritt des Eingreifens zwischen einem Gewindeabschnitt des zweiten Verriegelungsstifts (13) und einem Knauf (17) eingeschlossen ist.

## Revendications

1. Dispositif mobile (1) pour l'entretien des terres, comprenant :
- des moyens de déplacement (2) configurés pour permettre un déplacement du dispositif mobile (1) dans une zone de travail,
- un cadre (3) comprenant au moins un outil de travail configuré pour effectuer des opérations d'entretien sur la zone de travail,
- une poignée d'entraînement (4) configurée pour permettre à un opérateur d'entraîner ledit dispositif mobile (1) dans la zone de travail,
- au moins un élément de fixation (5) interposé, au moins dans un état de contrainte, entre la poignée d'entraînement (4) et le cadre (3), et
- au moins une partie de couplage (11) portée par la poignée d'entraînement (4) ou par le cadre (3),
dans lequel ledit élément de fixation (5) comprend :
- au moins un corps principal (6),
- au moins une première rainure (7) s'étendant d'une zone interne du corps principal (6) à une zone périphérique du corps principal (6) lui-même où une première ouverture (7a) d'accès à la première rainure (7) est définie, et
- au moins une seconde rainure (8) distincte et espacée de la première rainure (7), ladite seconde rainure (8) s'étendant de la zone interne du corps principal (6) vers la zone périphérique du corps principal (6) lui-même où une seconde ouverture (8a) pour accéder à la seconde rainure (8) est définie,
dans lequel ladite partie de couplage (11) peut être engagée de manière amovible sur l'élément de fixation (5), au moins entre :
- la condition de contrainte dans laquelle l'élément de fixation (5) est engagé sur la partie de couplage (11), et
- une condition de libération dans laquelle l'élément de fixation (5) est désengagé de la partie de couplage (11) et
dans lequel la partie de couplage (11) a au moins une première et une seconde broche de verrouillage (12, 13) configurées respectivement pour s'insérer à l'intérieur de la seconde rainure (8) et de la première rainure (7),
dans lequel la partie de couplage (11) a un corps allongé s'étendant le long d'une direction d'extension prédéterminée,
le dispositif mobile (1) étant **caractérisé en ce que** les première et seconde broches de verrouillage (12, 13) sont alignées le long de ladite direction d'extension,
dans lequel la première et la seconde broche de verrouillage (12, 13) ont une extension respective (12a, 13a) sortant transversalement par rapport au corps allongé de la partie de couplage (11), chacun desdits segments (12a, 13a) pouvant être respectivement engagé dans la seconde et la première rainure (8, 7).

2. Dispositif (1) selon la revendication 1, dans lequel, dans l'état de libération, l'élément de fixation (5) est porté par le cadre (3), tandis que la partie de couplage (11) est portée par la poignée d'entraînement (4).

3. Dispositif (1) selon la revendication 1 ou la revendication 2, dans lequel le corps allongé de la partie de couplage (11) est un corps tubulaire.

4. Dispositif (1) selon l'une quelconque des revendications 1 à 3, dans lequel lesdits segments (12a, 13a) sortent orthogonalement par rapport au corps allongé de la partie de couplage (11).

5. Dispositif (1) selon l'une quelconque des revendications 1 à 4, dans lequel la première rainure (7) s'étend à partir de la première ouverture (7a) sur au moins un premier segment, le long d'une trajectoire droite (X),
dans lequel la seconde rainure (8) a :
- au moins un premier segment s'étendant à partir de la seconde ouverture (8a), transversalement à la trajectoire (X) de la première rainure (7), et
- au moins un second segment s'étendant dans la continuation du premier segment, le long d'une direction parallèle ou coïncidant avec la trajectoire (X),
dans lequel le corps principal (6) a :
- au moins un premier et un second côté (6a, 6b) opposés l'un à l'autre, et
- une partie de tête (6c) reliant les premier et second côtés (6a, 6b),
dans lequel la première ouverture (7a) de la première rainure (7) fait face à la partie de tête (6c) du corps principal (6),
dans lequel la seconde ouverture (8a) de la seconde rainure (8) fait face au premier ou au second côté (6a, 6b) du corps principal (6), à une distance prédéterminée de la première ouverture (7a), et
dans lequel les premier et second côtés (6a, 6b) du corps principal (6) sont droits et parallèles à la trajectoire (X).

6. Dispositif (1) selon la revendication 5, dans lequel l'élément de fixation (5) comprend au moins une partie de contrainte (9) s'étendant à partir du corps principal (6) et s'étendant le long d'une direction d'extension (D) qui est inclinée par rapport à la trajectoire (X).

7. Dispositif (1) selon la revendication 6, dans lequel la direction d'extension (D) est inclinée par rapport à la trajectoire (X) d'un angle interne compris entre 50° et 70°.

8. Dispositif (1) selon l'une quelconque des revendications 5 à 7, dans lequel la première ouverture (7a) est délimitée par des premier et second segments d'entrée respectifs (6c', 6c") et dans lequel la seconde ouverture (8a) est délimitée par des premier et second segments d'entrée respectifs (8c', 8c").

9. Dispositif (1) selon la revendication 8, dans lequel les premier et second segments d'entrée (6c', 6c") de la première ouverture (7a) sont arqués.

10. Dispositif (1) selon la revendication 8 ou la revendication 9, dans lequel les premier et second segments d'entrée (8c', 8c") de la seconde ouverture (8a) sont arqués.

11. Dispositif (1) selon l'une quelconque des revendications 8 à 10, dans lequel la première ouverture (7a) de la première rainure (7) divise la zone périphérique de la partie de tête (6c) du corps principal (6) en :
- ledit premier segment d'entrée (6c'), qui est interposé entre le premier côté (6a) et la première ouverture (7a) de la première rainure (7), et
- ledit second segment d'entrée (6c"), qui est interposé entre le second côté (6b) et la première ouverture (7a) de la première rainure (7).

12. Dispositif (1) selon la revendication 11, dans lequel le premier segment d'entrée (6c') fait saillie extérieurement, parallèlement à ladite trajectoire (X), par rapport au second segment d'entrée (6c") pour définir une lèvre de support (20).

13. Procédure de montage d'un dispositif (1) selon l'une quelconque des revendications 5 à 12, comprenant une étape de contrainte de la poignée d'entraînement (4) sur le cadre (3) en exploitant lesdites première et seconde rainures (7, 8) présentes sur l'élément de fixation (5),
dans lequel la partie de couplage (11) dudit dispositif (1) a au moins une première et une seconde broche de verrouillage (12, 13) configurées respectivement pour s'insérer à l'intérieur de la seconde rainure (8) et de la première rainure (7) et
dans lequel l'étape consistant à contraindre la poignée d'entraînement (4) au cadre (3) comprend les sous-étapes consistant à :
- insérer la première broche de verrouillage (12) à l'intérieur du premier segment de la seconde rainure (8),
- disposer la seconde broche de verrouillage (13) au niveau de la première ouverture (7a) de la première rainure (7),
- insérer la première broche de verrouillage (12) à l'intérieur du second segment de la seconde rainure (8) et insérer simultanément la seconde broche de verrouillage (13) à l'intérieur de la première rainure (7).

14. Procédé selon la revendication 13, dans lequel la disposition de la seconde broche de verrouillage (13) au niveau de la première ouverture (7a) comprend l'appui d'une telle seconde broche sur une lèvre de support (20), déchargeant ainsi le poids de la poignée (4) sur le cadre (3).

15. Procédé selon la revendication 13 ou la revendication 14, dans lequel après l'étape d'insertion de la seconde broche de verrouillage (13) à l'intérieur de la première rainure (7), une étape d'engagement est incluse entre une partie filetée de la seconde broche de verrouillage (13) et un bouton (17).
